# EUROPEAN PATENT APPLICATION

(11) **EP 4 316 268 A1**
(43) Date of publication of application: **07.02.2024**
(21) Application number: 22775815.8
(22) Date of filing: 25.03.2022
(51) Int. Cl.: A23L 27/00, A23L 27/21

(54) **MEAT FLAVOR IMPARTING AGENT**

(30) Priority: 25.03.2021 JP 2021051775
(71) Applicant: AJINOMOTO CO., INC., Chuo-ku Tokyo 104-8315 (JP)
(72) Inventor: KOBA, Ryusuke, Kawasaki-shi, Kanagawa 210-8681 (JP); SOETA, Miyako, Kawasaki-shi, Kanagawa 210-8681 (JP)
(74) Representative: Strehl Schübel-Hopf & Partner
(86) International application number: PCT/JP2022/014274
(87) International publication number: WO 2022/203034

(57) **Abstract**

The present invention aims to provide a composition that can be used widely, can be produced easily, and is capable of imparting livestock meat flavors without containing livestock meat materials, and a production method thereof. In detail, a method for producing a livestock meat flavor-imparting agent, including heating a crude sugar, and a cysteine or a salt thereof and a livestock meat flavor-imparting agent containing a heated product of crude sugar, and cysteine or a salt thereof are provided.

## Description

### [Technical Field]

The present invention relates to a livestock meat flavor-imparting agent that can be conveniently applied to food products and a production method thereof. In addition, the present invention relates to food products imparted with livestock meat flavors, a production method thereof, and further, a method for imparting livestock meat flavors.

### [Background Art]

The elements that determine the "deliciousness" of food products include physical factors such as texture, color and sound that can be perceived through touch, sight, hearing, as well as chemical factors such as flavor that can be perceived through sense of taste and sense of smell. Particularly, the stimulation of aroma on deliciousness is well known. Among them, the flavors and taste of various livestock meats such as pork, chicken, and beef, as well as flavors and tastes of extracts, broths, and soup carefully prepared from various livestock meat materials, are known to influence deliciousness and increase appetite.

Conventional livestock meat flavor imparting materials are derived from livestock meat as raw materials. For example, it is known that livestock meat extracts obtained from bone-in livestock meat pieces have dense and flavorful richness and taste (Patent Literature 1).

On the other hand, with respect to livestock meat consumption in recent years, there has been an increase in cases where not only livestock meat itself but also foods flavored with livestock meat materials cannot be consumed due to religious reasons, dietary preferences such as vegetarianism, veganism, and further, efforts towards sustainability.

For example, as livestock meat flavors without using livestock meat raw materials, aromatic components such as 2-methyl-3-furanthiol generated by the reaction of cysteine with ribose or inosinic acid (Non Patent Literature 1), and flavor enhancers and meat flavors obtained by adding cysteine-rich natural food materials and reducing sugars have been reported (Patent Literature 2).

However, flavors not using the livestock meat raw materials as mentioned above show low reproducibility of imparting livestock meat flavors. Therefore, the development of animal-free livestock meat flavor imparting materials that can certainly impart meat flavors has been demanded.

### [Citation List]

### [Patent Literature]

[PTL 1]
   JP-A-2014-103888
[PTL 2]
   JP-A-2001-321118

### [Non Patent Literature]

[NPL 1]
Flavor of Meat, Meat Products and Seafood, F. Shahidi, Springer, Section 5 (46-47, 84-87), 1998

### [Summary of Invention]

### [Technical Problem]

The present invention aims to provide a composition capable of conveniently imparting livestock meat flavors without using a livestock meat material.

### [Solution to Problem]

The present inventors have conducted intensive studies in an attempt to solve the aforementioned problems and found that a product obtained by co-heating a food product material containing a crude sugar, particularly unrefined cane sugar, and cysteine not only imparts a livestock meat flavor as a reaction flavor but also a livestock meat taste. They have conducted further studies and completed the present invention.

Accordingly, the present invention provides the following.
[1] A method for producing a livestock meat flavor-imparting agent, comprising heating a crude sugar, and a cysteine or a salt thereof.
[2] The method of [1], wherein the crude sugar is unrefined cane sugar.
[3] The method of [1] or [2], wherein the cysteine is derived from a cysteine-containing raw material.
[4] The method of [3], wherein the cysteine-containing raw material is selected from the group consisting of glutathione, a glutathione-containing yeast extract, a cysteine-containing yeast extract, cystine, and a food product with a high cysteine content.
[5] The method of [4], wherein the glutathione is treated with an enzyme.
[6-1] The method of any of [1] to [5], wherein 0.001 to 10 parts by weight of the cysteine or a salt thereof is heated with respect to 1 part by weight of the crude sugar.
[6-2] The method of any of [1] to [5], wherein 0.0005 to 50 parts by weight of cysteine or a salt thereof is heated with respect to 1 part by weight of the crude sugar.
[7-1] The method of any of [1] to [6-2], wherein a heating temperature is 80 to 150°C.
[7-2] The method of any of [1] to [6-2], wherein a heating temperature is 60 to 170°C.
[8-1] The method of any of [1] to [7-2], wherein a heating time is 30 to 180 min.
[8-2] The method of any of [1] to [7-2], wherein a heating time is 15 to 200 min.
[9] The method of any of [1] to [8-2], wherein the livestock meat flavor-imparting agent is for animal-free food products.
[10] A livestock meat flavor-imparting agent comprising a heated product of a crude sugar, and cysteine or a salt thereof as an active ingredient.
[11] The agent of [10], wherein the crude sugar is unrefined cane sugar.
[12] The agent of [10] or [11], wherein the cysteine is a cysteine derived from a cysteine-containing raw material.
[13] The agent of [12], wherein the cysteine-containing raw material is selected from the group consisting of glutathione, a glutathione-containing yeast extract, a cysteine-containing yeast extract, cystine, and a food product with a high cysteine content.
[14] The agent of [13], wherein the glutathione is treated with an enzyme.
[15-1] The agent of any of [10] to [14], wherein a weight ratio of the crude sugar and the cysteine or a salt thereof is 1:0.001 - 10 before heating.
[15-2] The agent of any of [10] to [14], wherein a weight ratio of the crude sugar and the cysteine or a salt thereof is 1:0.0005 - 50 before heating.
[16] The agent of any of [10] to [15-2], wherein a concentration of the imparting agent at the time of eating is 10 to 100,000 ppm with respect to the food product.
[17] The agent of any of [10] to [16], for animal-free food products.
[18] A method for imparting a livestock meat flavor, comprising adding a heated product of a crude sugar, and cysteine or a salt thereof to a food product.
[19] The method of [18], wherein the crude sugar is unrefined cane sugar.
[20] The method of [18] or [19], wherein the cysteine is a cysteine derived from a cysteine-containing raw material.
[21] The method of [20], wherein the cysteine-containing raw material is selected from the group consisting of glutathione, a glutathione-containing yeast extract, a cysteine-containing yeast extract, cystine, and a food product with a high cysteine content.
[22] The method of [21], wherein the glutathione is treated with an enzyme.
[23-1] The method of any of [18] to [22], wherein a weight ratio of the crude sugar and the cysteine or a salt thereof is 1:0.001 - 10 before heating.
[23-2] The method of any of [18] to [22], wherein a weight ratio of the crude sugar and the cysteine or a salt thereof is 1:0.0005 - 50 before heating.
[24] The method of any of [18] to [23-2], wherein the heated product is added at a concentration of 10 to 100,000 ppm with respect to the food product.
[25] The method of any of [18] to [24], wherein the food product is an animal-free food product.
[26] A method for producing a food product, comprising adding a heated product of a crude sugar, and cysteine or a salt thereof.
[27] A food product comprising a heated product of a crude sugar, and cysteine or a salt thereof.
[28] A method for imparting a livestock meat flavor, comprising adding a crude sugar, and cysteine or a salt thereof to a food product, and heating the added food product.
[29] A method for producing a food product, comprising adding a crude sugar, and cysteine or a salt thereof to a food product, and heating the added food product.

### [Advantageous Effects of Invention]

Using the livestock meat flavor-imparting agent of the present invention, a livestock meat flavor can be imparted to food products without using any livestock meat material.

According to the present invention, an animal-free food product for those who are unable to consume livestock meat can be provided.

### [Description of Embodiments]

The present invention provides a method for producing a livestock meat flavor-imparting agent, including heating a crude sugar, and a cysteine or a salt thereof (hereinafter sometimes to be abbreviated as the production method of the present invention).

In the present invention, the "livestock meat flavor" means a unique flavor perceived from a livestock meat (e.g., beef, pork, chicken, etc.) or a food material derived from a livestock meat such as a livestock meat extract (e.g., beef extract, pork extract, chicken extract, etc.), and the like, and particularly refers to a flavor present when livestock meat is cooked by heating and the like.

In addition, to "impart" a livestock meat flavor means imparting a livestock meat flavor to a food product regardless of whether or not it contains livestock meat, and is a concept that also includes enhancing the flavor of a food product derived from livestock meat. The presence or absence and degree of livestock meat flavor can be evaluated by a sensory evaluation by a specialized panel.

The flavor used in the present invention means the sensory qualities of aroma, taste and overall mouthfeel.

The aroma used in the present invention means the aroma that is directly scented from the nose (orthonesal flavor) and the aroma that is emitted from the oral cavity to the nose during eating and drinking (retronasal flavor).

The taste used in the present invention means the strength of the five tastes (sweetness, saltiness, bitterness, sourness, and umami) felt in the oral cavity when eating and drinking.

The mouthfeel used in the present invention means the feeling that can be captured in the oral cavity. In particular, it excludes chemical sensations sensed by gustatory cells, such as sensations of thickness, spread, persistence, and the like.

Sugar can be divided into crude sugar (non-centrifugal sugar), which is obtained by squeezing plants to be the raw materials, and refined sugar (centrifugal sugar), which is obtained by further refining the sugar content. Plants used as the raw material include sugarcane, sugar beet, sugar maple (Acer saccharum), Borassus flabellifer (Arenga pinnata), sweet sorghum (sugar sorghum) and the like, and the place of production and origin are not particularly limited.

The crude sugar in the present invention is the sugar (non-centrifugal sugar) obtained by boiling down the squeezed juice of the aforementioned plant, and generally means sugar made by boiling down the squeezed juice of sugar cane. For example, unrefined cane sugar (Muscovado Sugar), Shiroshita-to, casonade (raw sugar), refined Japanese sugar, sorghum sugar, maple sugar, and the like can be mentioned. Among them, unrefined cane sugar, unrefined cane sugar with processing, and unrefined cane sugar molasses are preferred, and unrefined cane sugar is more preferred, from the aspect that it is desirable to have a low degree of purification and contain many impurities.

The composition of unrefined cane sugar (Muscovado Sugar) contains about 80% sucrose and minerals such as calcium, potassium, copper, and zinc, and vitamins such as vitamin B₁, B₂, and niacin as described in the 4th Edition Food Composition Table (Kagawa Nutrition University Publishing Division, pp. 70-73) .

The crude sugar in the present invention may be one produced by a conventional method or a commercially available product. For example, it is produced by smashing harvested sugar cane or the like to squeeze juice, removing impurities from the juice as necessary, and boiling down the juice.

The cysteine used in the present invention can be L-form, D-form, or a mixture thereof (e.g., racemate), and L-form is preferably used.

The salt of cysteine may be either an acid addition salt or a base addition salt. Examples of the acid addition salt include salts with mineral acids such as hydrochloric acid, sulfuric acid, nitric acid, phosphoric acid, and the like; salts with organic carboxylic acid such as formic acid, acetic acid, citric acid, fumaric acid, gluconic acid, malic acid, succinic acid, tartaric acid, trichloroacetic acid, trifluoroacetic acid, and the like; salts with sulfonic acids such as methanesulfonic acid, benzenesulfonic acid, p-toluenesulfonic acid, mesitylenesulfonic acid, naphthalenesulfonic acid, and the like. Examples of the base addition salt include salts with alkali metals such as sodium, potassium, and the like; salts with alkaline earth metals such as calcium, magnesium, and the like; salts with nitrogen-containing organic bases such as ammonium salt, trimethylamine, triethylamine, tributylamine, pyridine, N,N-dimethylaniline, N-methylpiperidine, N-methylmorpholine, diethylamine, dicyclohexylamine, procaine, dibenzyl amine, N-benzyl-β-phenethylamine, 1-ephenamine, N,N'-dibenzyl ethylenediamine, and the like. Among them, salts with hydrochloric acid, sodium, potassium, calcium, and magnesium are preferred, and hydrochloride is more preferred, from the aspect of easy availability as a food additive.

In addition, cysteine or a salt thereof can exist not only in a non-solvation type, but also as a hydrate or solvate, and the hydrate or solvate may exist as any crystal form depending on the production conditions.

Cysteine or a salt thereof in the present invention may be produced by a conventional organic synthesis method, a biochemical method using enzymes or microorganisms, or a method combining these, or may be a commercially available product.

Cysteine in the present invention includes cysteine or cysteine derived from cysteine-containing raw materials.

Examples of the cysteine-containing raw materials include glutathione, which is a tripeptide consisting of cysteine, glutamic acid, and glycine, glutathione-containing yeast or its extract, cysteine-rich yeast or its extract, cystine, food products with a high cysteine content, or materials containing them, and the like. These cysteine-containing raw materials can be used alone or in combination.

Glutathione-derived cysteine means cysteine obtained from glutathione, which is the origin of cysteine. The same applies to others.

Examples of a food product with a high cysteine content include cysteine-containing plants, animals, fungi, and processed products thereof, such as meat such as liver, fish, chicken eggs, garlic, onions, broccoli, and Brussels sprouts. Among these, onions, garlic, liver, and the like are preferred.

The above-mentioned yeast, yeast extract, and materials may be used as they are, or may be obtained by processing such as extraction and purification, or by enzymatic treatment.

Among them, cysteine derived from glutathione, cysteine derived from glutathione-containing yeast extract, cysteine derived from cysteine-rich yeast extract, cysteine derived from cystine, and cysteine derived from a food product with a high cysteine content are preferred, and cysteine derived from glutathione treated with an enzyme such as glutaminase or peptidase, cysteine derived from enzyme-treated yeast extract containing glutathione, and cysteine derived from yeast extract with high cysteine content are more preferred, from the aspects of ease of achieving effects and ease of handling.

In the present invention, yeast extract is a general term for a liquid obtained by extracting the contents of yeast or a powder obtained by further drying the liquid. As yeast extracts containing cystein or a salt thereof, yeast extracts derived from yeast belonging to the genus Saccharomyces such as Saccharomyces cerevisiae, the genus Schizosaccharomyces such as Schizosaccharomyces pombe, and the genus Candida such as Candida utilis are generally used. Yeast extracts derived from yeasts belonging to the genus Saccharomyces or the genus Candida are preferred.

In the production method of the present invention, when cysteine derived from glutathione, glutathione-containing yeast, or extract thereof is used as cysteine or a salt thereof, a step of an enzymatic treatment by adding enzymes such as glutaminase and peptidase to them may be included before the heating step. In principle, the reaction of these enzymes degrades the substrate glutathione to obtain glutathione-derived cysteine.

Enzyme treatment can be performed based on a conventional method. The concentrations of cysteine and cysteine-containing materials in the enzyme treatment and the amount of enzyme to be added can be appropriately determined according to various conditions such as the type of enzyme and the like. For example, after mixing the cysteine-containing material and the enzyme, the pH is generally adjusted to 5-9, preferably 6-7. For example, the mixture after pH adjustment is generally subjected to enzyme treatment at 20 to 60°C, preferably 40 to 55°C, for 1 to 3 hr. A heating step or a cooling step may be included for deactivation of the enzyme as necessary.

In the production method of the present invention, the ratio of the crude sugar, and cysteine or a salt thereof to be heated is generally 0.001 to 10 parts by weight of cysteine or a salt thereof with respect to 1 part by weight of the crude sugar. From the aspect of easy achievement of appropriate effect, it is preferably 0.01 to 1 part by weight, more preferably 0.05 to 0.5 part by weight. When a cysteine-containing material is used, the content (concentration) of cysteine and the amount of cysteine to be added are calculated based on the amount of cysteine itself in the material, unless otherwise specified.

In another embodiment, in the production method of the present invention, the ratio of crude sugar, and cysteine or a salt thereof to be heated is set to generally 0.0005 parts by weight or more, preferably 0.0008 parts by weight or more, more preferably 0.001 parts by weight or more, still more preferably 0.01 parts by weight or more, and particularly preferably 0.1 parts by weight or more, with respect to 1 part by weight of the crude sugar, from the aspect of easy achievement of appropriate effect. The upper limit is generally 50 parts by weight or less, preferably 30 parts by weight or less, more preferably 10 parts by weight or less. When a cysteine-containing material is used, the content (concentration) of cysteine and the amount of cysteine to be added are calculated based on the amount of cysteine itself in the material, unless otherwise specified.

The method of heating crude sugar, and cysteine or a salt thereof is not particularly limited. For example, a mixture of crude sugar, and cysteine or a salt thereof may be directly heated, or the mixture may be dissolved or dispersed in, for example, a medium such as solvent, dispersion medium, and the like, and then heated. When the mixture is heated in a medium, it may be heated under stationary conditions, or may be heated while stirring appropriately using a heating stirring device such as an oil bath or a kneader.

When heated in a medium, in the method of the present invention, a medium such as water, edible oil, liquid seasoning, or the like is used, and water is preferably used from the aspect of less impurities and ease of handling.

The pH of the solution in which crude sugar and cysteine are dissolved in a medium is generally adjusted to pH 3-9, preferably pH 4-8, using hydrochloric acid and sodium hydroxide that meet Food additive standards.

In another embodiment, the pH of a solution in which crude sugar and cysteine are dissolved in a medium is generally pH 2 or higher, preferably pH 3 or higher, more preferably pH 4 or higher, using hydrochloric acid and sodium hydroxide that meet Food additive standards. The upper limit is adjusted to pH 9 or less, preferably pH 8 or less.

The heating temperature of crude sugar, and cysteine or a salt thereof may be appropriately adjusted according to the heating time, and the like. From the aspect of easy achievement of appropriate effect, it is generally 80 to 150°C, preferably 95 to 130°C, more preferably 95 to 120°C.

In another embodiment, the heating temperature of crude sugar, and cysteine or a salt thereof may be appropriately adjusted according to the heating time and the like. From the aspect of easy achievement of appropriate effect, it is generally 60°C or higher, preferably 70°C or higher, more preferably 80°C or higher, still more preferably 95°C or higher. The upper limit is generally 170°C or lower, preferably 160°C or lower, more preferably 150°C or lower.

The heating time of crude sugar, and cysteine or a salt thereof may be appropriately adjusted according to the heating temperature and the like. From the aspect of easy achievement of appropriate effect, it is generally 10 to 480 min, preferably 20 to 300 min, more preferably 30 to 180 min, particularly preferably 60 to 120 min.

In another embodiment, the heating time of crude sugar, and cysteine or a salt thereof may be appropriately adjusted according to the heating temperature and the like. From the aspect of easy achievement of appropriate effect, it is generally 15 min or more, preferably 20 min or more, more preferably 30 min or more, and the upper limit is generally 200 min or less, preferably 190 min or less, more preferably 180 min or less.

The crude sugar, and cysteine or a salt thereof may be heated under normal pressure or under pressure.

After heating crude sugar, and cysteine or a salt thereof in a medium, the resulting heated product may be used after separation from the medium. Alternatively, when, for example, the medium used for heating can be used as a food material, the resulting heated product may be used together with the medium without separating from the medium. Furthermore, a heated product obtained by heating crude sugar, and cysteine or a salt thereof in food (for example, kneading into meat patties or coating on the surface of food) can be used without separating from the food.

In the production method of the present invention, conventional steps used in general livestock meat flavor-imparting materials, such as adding other additives, concentrating, and formulating, may be added as appropriate.

In the production method of the present invention, the livestock meat flavor-imparting agent can be used for the entire food product, and is not particularly limited as long as the food product requires a livestock meat flavor. Above all, it can be used for animal-free food products because it does not use livestock meat materials. The "animal-free food product" means a food product that does not use animal-derived ingredients, and means a food product that meets dietary restrictions for religious reasons or dietary preferences.

Another aspect of the present invention is a livestock meat flavor-imparting agent containing a heated product of a crude sugar, and cysteine or a salt thereof as an active ingredient (sometimes to be simply referred to as "the imparting agent of the present invention" in the present specification).

The "heated product of crude sugar, and cysteine or a salt thereof" used in the present invention refers to a substance obtained by co-heating crude sugar, and cysteine or a salt thereof (sometimes simply abbreviated as heated product in the present invention).

The definitions and preferred ranges of crude sugar, and cysteine or a salt thereof follow those described above.

The weight ratio of crude sugar to cysteine or salt thereof before heating is generally 1:0.001 to 10, preferably 1:0.01 to 1, more preferably 1:0.05 to 0.5, from the aspect of enhancing livestock meat flavor and taste. For example, the heated product in the present invention can be obtained by heating a mixture in such ratio under the conditions described in the production method of the present invention.

In another aspect, the weight ratio of crude sugar to cysteine or a salt thereof before heating is generally 1:0.0005 to 50, preferably 1:0.0008 to 30, more preferably 1:0.001 to 10, further preferably 1:0.01 to 1, from the aspect of enhancing livestock meat flavor and taste. For example, the heated product in the present invention can be obtained by heating a mixture in such ratio under the conditions described in the production method of the present invention.

The form of the imparting agent of the present invention is not particularly limited, and examples include solid (including powder, granule, and the like), liquid (including slurry, and the like), gel, paste, and the like.

The imparting agent of the present invention may consist only of the heated product in the present invention, and may further contain a conventional base according to the form and the like of the imparting agent of the present invention.

Examples of the base when the imparting agent of the present invention is liquid include water, ethanol, glycerin, propylene glycol, and the like.

Examples of the base when the imparting agent of the present invention is solid include various sugars such as starch, dextrin, cyclodextrin, sucrose and glucose, protein, peptide, salt, solid fat, silicon dioxide, and mixtures thereof, yeast bacterial cells, various powder extracts, and the like.

The imparting agent of the present invention may further contain, in addition to the heated product in the present invention, for example, excipient, pH adjuster, antioxidant, thickening stabilizer, sweetener (e.g., sugar, etc.), acidulant, spice, colorant, and the like, as long as the purpose of the present invention is not impaired.

The application agent of the present invention can be produced according to the aforementioned production method of the present invention. The imparting agent of the present invention may be subjected to, for example, concentration treatment, drying treatment, decolorization treatment, and the like alone or in combination.

The concentration of the imparting agent of the present invention at the time of eating with respect to the total weight of the food is appropriately changed depending on the kind and form of the food product. It is generally 1 to 100,000 ppm, preferably 10 to 10,000 ppm, more preferably 100 to 5,000 ppm.

In the present invention, the concentration at the time of eating refers to the concentration at the time of eating after cooking the food product. In the case of foods such as processed food products that are cooked before eating according to the product instructions, the concentration after cooking is intended. In the present invention, food products also include beverages and various seasonings. The concentration of the seasoning at the time of eating is calculated in consideration of the concentration of the seasoning actually added to the food product.

There is no particular limitation on the timing of mixing the imparting agent of the present invention with food products. It can be mixed not only as a raw material before production but also during production, after completion, just before eating, during eating, and the like of food products, and the effect of imparting livestock meat flavor and taste to food products can be obtained by mixing at any time.

In the present invention, the food product to which the livestock meat flavor is imparted is not particularly limited. When using the imparting agent of the present invention, it can be added to food products in the form of a seasoning, added to food products after diluting with water or a solvent, mixed as a raw material of solid seasoning or liquid seasoning, or mixed as a raw material of processed food products or processed livestock meat food products that do not contain any livestock meat ingredients, and there is no particular restriction on the form of use.

Specific preferred examples include those desired to be imparted with livestock meat flavor. For example, soup (including dried soup) such as consomme soup (e.g., chicken, pork, beef etc.), Western-style soup, Chinese-style soup, curry flavor soup, cream soup, onion soup, ramen soup, Japanese-style clear soup, miso soup, and the like; meat processed food products such as ham, sausage, dumpling, Chinese dumpling, hamburger steak, fried chicken, pork cutlet, and the like; dairy products such as butter and the like; rice processed food products such as fried rice, pilaf, curry, and the like; seasonings such as natural seasoning, flavor seasoning, menu seasoning, dressing, sauce (e.g., demi-glace sauce, medium thick sauce, white sauce, cheese sauce, carbonara sauce, etc.), and the like; other processed food products such as noodles, gratin, croquette, and the like; frozen food products (frozen food products of the aforementioned food products (e.g., dumpling, Chinese dumpling, fried rice, hamburger steak, fried chicken, gratin, pork cutlet, croquette, etc.), etc.), and meat substitutes (e.g. steak, grilled meat, etc.) or meat substitute food products (foods in which the livestock meat in the aforementioned food products (e.g., dumpling, Chinese dumpling, fried rice, hamburger steak, fried chicken, gratin, pork cutlet, croquette, etc.) is replaced with meat substitute) can be mentioned.

Meat substitute refers to plant-based food products that can replace livestock meat and are made using plant-based raw materials such as beans (soybean and the like) and rice, instead of livestock meat, to reproduce the taste and texture of meat.

In addition, those desired to be imparted with or enhanced in seafood flavor are also preferred. For example, soup (including dried soup) such as seafood soup (e.g., bouillabaisse), sauce (e.g., pescatore), Western-style soup, Chinese-style soup, curry-flavored soup, ramen soup, soups such as Japanese-style clear soup and miso soup, fish paste, and fish substitute or fish substitute food product (e.g., tuna, fish paste, etc.) can be mentioned.

Furthermore, those desired to be imparted with or enhanced in egg flavor are also preferred. For example, Western-style sauces (mayonnaise, etc.), Western confectionery (pudding, castella, etc.), egg substitutes, and egg substitute food products (e.g., JUST Egg (JUST)) can be mentioned.

In the present specification, "natural seasoning" refers to a seasoning produced by methods such as extraction, decomposition, heating, fermentation and the like, using natural products as raw materials. Specific examples thereof include various livestock meat extracts such as chicken meat extract, beef meat extract, pork meat extract, mutton meat extract, and the like; various bone extracts such as chicken bone extract, beef bones extract, pork bone extract, and the like; various vegetable extracts such as onion extract, Chinese cabbage extract, celery extract, and the like; various spice extracts such as garlic extract, chile extract, pepper extract, cacao extract, and the like; yeast extracts; various protein hydrolysates; various fermentation seasonings such as soy sauce, fish sauce, shrimp sauce, miso, and the like, mixtures thereof, and processed products thereof (e.g., soy sauce processed products such as men-tsuyu, ponzu soy sauce, and the like), and the like. The "flavor seasoning" refers to a seasoning used to impart the aroma, flavor, and taste of flavor raw materials to food products, and can be produced, for example, by adding sugar, salt, and the like to natural seasonings. Specific examples of the flavor seasoning include various livestock meat flavor seasonings such as chicken flavor seasoning, beef flavor seasoning, pork flavor seasoning, and the like; various spicy vegetable flavor seasonings and the like. The "menu seasoning" refers to seasonings suitable for cooking specific menus (Chinese menu, etc.). Specific examples thereof include Chinese mixed seasonings, mixed seasonings, general-purpose paste seasonings, seasoning for hot pot dish, rice flavoring, fried rice flavoring, mixed spice, and the like.

Among the above-mentioned food products, the imparting agent of the present invention is also preferably applied to animal-free food products. For example, by using the imparting agent of the present invention for meat substitutes and meat substitute food products, food products can also be provided to people under restrictions due to religious reasons or dietary preferences.

As another embodiment of the present invention, a method for imparting a livestock meat flavor, comprising adding a heated product of a crude sugar, and cysteine or a salt thereof to a food product (at times simply referred to as "the imparting method of the present invention" in the present specification) can also be mentioned.

In the imparting method of the present invention, the definitions and preferred ranges of crude sugar, and cysteine or a salt thereof follow those described above.

In addition, the definitions and preferred ranges of the heated product of crude sugar, and cysteine or a salt thereof follow those described above.

In the imparting method of the present invention, the addition concentration of the heated product to food products in the present invention is preferably the same as the concentration with respect to the total weight of the food product at the time of eating. It is generally 1 to 100,000 ppm, preferably 10 to 10,000 ppm., more preferably 100 to 5,000 ppm.

In the imparting method of the present invention, the definitions and preferred ranges of the food product to be imparted follow those described above.

Another embodiment of the present invention is a method for imparting a livestock meat flavor, including adding a crude sugar, and cysteine or a salt thereof to a food product, and heating the added food product (also to be referred to as the second imparting method).

By adding crude sugar, and cysteine or a salt thereof to the above-mentioned food product and then heating, a livestock meat flavor is imparted to the entire food product. For example, crude sugar, and cysteine or a salt thereof can be kneaded into a meat substitute patty or the like, or applied to the surface of the meat substitute or food product and then heated to impart meat flavor to the food product. The food product is not particularly limited as long as it is the above-mentioned food product. A meat substitute or meat substitute food product in which livestock meat is replaced with a meat substitute and the like are preferred.

In the second imparting method, the heating temperature for heating the food product may be appropriately adjusted according to the heating time and the like. From the aspect of easy achievement of appropriate effect, it is generally 60°C or higher, preferably 70°C or higher, more preferably 80°C or higher, more preferably 95°C or higher, and the upper limit is generally 300°C or lower, preferably 260°C or lower, more preferably 240°C or lower, further preferably 170°C or lower, particularly preferably 160°C or lower, most preferably 150°C or lower.

The heating time of food product may be appropriately adjusted according to the heating temperature and the like. From the aspect of easy achievement of appropriate effect, it is generally 1 min or more, preferably 3 min or more, more preferably 5 min or more, further preferably 15 min or more, particularly preferably 20 min or more, most preferably 30 min or more, and the upper limit is generally 200 min or less, preferably 190 min or less, more preferably 180 min or less, further preferably 40 min or less, particularly preferably 30 min or less, particularly more preferably 20 min or less, most preferably 10 min or less.

Food products may be heated under normal pressure or under pressure.

In the second imparting method, the total addition concentration of crude sugar and cysteine or salt thereof with respect to the food product is generally 1 to 100,000 ppm, preferably 10 to 10,000 ppm, more preferably 100 to 5,000 ppm.

In the second imparting method, the definitions and preferred ranges of crude sugar, and cysteine or a salt thereof follow those described above.

Another embodiment of the present invention is a method for producing a food product, comprising adding a heated product of a crude sugar, and cysteine or a salt thereof (sometimes to be simply referred to as "the production method of food product of the present invention" in the present specification).

In the production method of food product of the present invention, the definitions and preferred ranges of crude sugar, and cysteine or a salt thereof follow those described above.

In addition, the definitions and preferred ranges of the heated product of crude sugar, and cysteine or a salt thereof follow those described above.

In the production method of food product of the present invention, the addition concentration of the heated product to food products in the present invention is preferably the same as the concentration with respect to the total weight of the food product at the time of eating. It is generally 1 to 100,000 ppm, preferably 10 to 10,000 ppm, more preferably 100 to 5,000 ppm.

In the production method of food product of the present invention, the definitions and preferred ranges of the food product to be produced follow those described above.

Another embodiment of the present invention is a method for producing a food product, including adding a crude sugar, and cysteine or a salt thereof to a food product, and heating the added food product (also to be referred to as the second production method).

By adding crude sugar, and cysteine or a salt thereof to the above-mentioned food product and then heating, a food product imparted with a livestock meat flavor can be produced. For example, crude sugar, and cysteine or a salt thereof can be kneaded into a meat substitute patty or the like, or applied to the surface of the meat substitute or food product and then heated to produce a food product imparted with a livestock meat flavor.

In the second production method, the definitions and preferred ranges of crude sugar, and cysteine or a salt thereof, the definitions and preferred ranges of heating conditions for crude sugar, and cysteine or a salt thereof, total addition concentration of crude sugar, and cysteine or a salt thereof with respect to the food product, and the definitions and preferred ranges of the food product follow those described in the second imparting method.

Another embodiment of the present invention is also a food product comprising a heated product of a crude sugar, and cysteine or a salt thereof (at times simply referred to as "the food product of the present invention" in the present specification) can also be mentioned.

In the food product of the present invention, the definitions and preferred ranges of cysteine or a salt thereof follow those described above.

In addition, the definitions and preferred ranges of the heated product of crude sugar, and cysteine or a salt thereof follow those described above.

In the food product of the present invention, the concentration of the heated product of the present invention in a food product is preferably the same as the concentration with respect to the total weight of the food product at the time of eating. It is generally 1 to 100,000 ppm, preferably 10 to 10,000 ppm, more preferably 100 to 5,000 ppm.

In the food product of the present invention, the definitions and preferred ranges of the food product follow those described above.

### [Example]

The present invention is described in more detail in the following by referring to examples, but the scope of implementation of the present invention is not limited by these examples. In the present specification, "%" and "ppm" mean "weight %" and "weight ppm", respectively, unless otherwise specified.

### [Example 1]

### 1. Preparation of livestock meat extract (boiled chicken extract)

(1) A whole chicken (purchased from Niikura Co., Ltd.) cut into quarters was pre-boiled over high heat for 2 min while removing lye, and then the blood was removed with running water.
(2) 4.0 kg of pre-boiled whole chicken and 6.5 L of water were put into a pan.
(3) Heated over high heat until boiling while removing lye and fat as appropriate.
(4) After boiling, the mixture was kept at a slight boil, and the mixture was boiled for 4 hr while removing lye and fat as appropriate.
(5) After boiling, the chicken broth was filtered through cooking paper sandwiched in a Chinois filter.
(6) After cooling to room temperature, the upper layer of fat was removed to obtain a boiled chicken extract.

### 2. Preparation of enzyme-treated glutathione

(1) Yeast extract containing glutathione (Angel Yeast Co., Ltd.), glutaminase, and peptidase (both from Amano Enzyme Co., Ltd.) were weighed in a beaker at the mixing ratio shown in Table 1.
(2) The mixture was stirred, mixed and dissolved using a stirrer and stirrer bar.
(3) The pH was adjusted to 7.0 with hydrochloric acid and sodium hydroxide that meet food additive standards.
(4) The mixture was transferred to a centrifuge tube and covered with a lid, the mixture was heated in a hot water bath at 50°C for 2 hr to obtain an enzyme-treated glutathione-containing yeast extract.

**[Table 1]**

| raw material | mixing ratio [wt%] |
|---|---|
| material name | |
| tap water | 49.95 |
| glutathione-containing yeast extract^{*1} | 49.95 |
| glutaminase | 0.05 |
| peptidase | 0.05 |

| | |
|---|---|
| *1: glutathione content 10%[w/w] | |

### 3. Preparation of each evaluation test section

(1) Each raw material was weighed in a beaker at the mixing ratio shown in Table 2.
(2) The mixture was stirred, mixed and dissolved using a stirrer and stirrer bar.
(3) The pH was adjusted to 5.0 with hydrochloric acid and sodium hydroxide that meet food additive standards.
(4) The mixture was transferred to a heat-resistant vial, sealed, and heated at 95°C for 2 hr using an oil bath.
(5) After cooling with flowing water, a sample for each evaluation test section was prepared.

**[Table 2]**

| test section No. | raw material | mixing ratio [wt%] |
|---|---|---|
| | material name | |
| 1 | tap water | 44.1 |
| | xylose (D-xylose) | 11.8 |
| | cysteine-containing yeast extract^{*2} | 44.1 |
| 2 | xylose (D-xylose) | 11.8 |
| | *enzyme-treated glutathione-containing yeast extract | 88.2 |
| 3 | tap water | 44.1 |
| | xylose (D-xylose) | 11.8 |
| | glutathione-containing yeast extract^{*1} | 44.1 |
| 4 | tap water | 44.1 |
| | unrefined cane sugar (Muscovado Sugar powder) | 11.8 |
| | cysteine-containing yeast extract^{*2} | 44.1 |
| 5 | unrefined cane sugar (Muscovado Sugar powder) | 11.8 |
| | *enzyme-treated glutathione-containing yeast extract | 88.2 |
| 6 | tap water | 44.1 |
| | unrefined cane sugar (Muscovado Sugar powder) | 11.8 |
| | glutathione-containing yeast extract^{*1} | 44.1 |

| | | |
|---|---|---|
| ^{*1}: glutathione content 10%[w/w] ^{*2}: cysteine content 1.8-3.0%[w/w] | | |

### 4. Sensory evaluation

(1) 1.0 wt% of each evaluation sample in Table 2 was dissolved in hot water at 65°C.
(2) A sensory evaluation was performed by a panel of five experts according to the following criteria.

A sensory evaluation regarding meat taste and/or mouthfeel (meat sweetness, sourness, umami, richness), meat aroma (meat smell of beast, smell of burning, smell of boiled meat), and overall livestock meat flavor (state in which both meat taste and/or mouthfeel and the meat aroma are imparted)) was performed by a panel of five experts. The prepared livestock meat extract (boiled chicken extract) was used as a positive control, and the quality far from that of the positive control meat extract was "-", somewhat close was "+", and close was "++". The average ratings by the five expert panel are shown in Table 3 below.

**[Table 3]**

| test section No. | heating raw material | | sensory evaluation results | | |
|---|---|---|---|---|---|
| | carbohydrates | amino acids | meat taste-mouthfeel | meaty aroma | overall livestock meat flavor |
| 1 | xylose | cysteine | - | + | - |
| 2 | xylose | enzyme-treated glutathione | - | + | - |
| 3 | xylose | glutathione | - | - | - |
| 4 | unrefined cane sugar | cysteine | + | ++ | ++ |
| 5 | unrefined cane sugar | enzyme-treated glutathione | + | ++ | ++ |
| 6 | unrefined cane sugar | glutathione | + | - | - |

In the test sections of unrefined cane sugar×cysteine and unrefined cane sugar×enzyme-treated glutathione, the quality of livestock meat flavor was close to that of meat in all items.

On the other hand, no effect was obtained in the test section using xylose as the carbohydrate.

### [Example 2]

### 1. Preparation of livestock meat extract (boiled chicken extract))

Boiled chicken extracts were prepared in the same manner as in Example 1.

### 2. Preparation of each evaluation test section

By a method similar to that in Example 1, each evaluation test section sample was prepared at the mixing ratio shown in Table 4.

**[Table 4]**

| test section No. | raw material | | supplier | mixing ratio [wt%] |
|---|---|---|---|---|
| | material name | product name | | |
| 1A | tap water | - | - | 89.0 |
| | unrefined cane sugar | Muscovado Sugar | Mitsui DM Sugar Co., Ltd. | 10.0 |
| | cysteine | Cysteine hydrochloride | Japan Protein Co., Ltd. | 1.0 |
| 2A | tap water | - | - | 89.0 |
| | unrefined cane sugar | Okinawa powdery Kokuto | Satsunan Sugar Co., Ltd. | 10.0 |
| | cysteine | Cysteine hydrochloride | Japan Protein Co., Ltd. | 1.0 |
| 3A | tap water | - | - | 89.0 |
| | unrefined cane sugar | Muscovado Sugar powder | Sanki Limited Company | 10.0 |
| | cysteine | Cysteine hydrochloride | Japan Protein Co., Ltd. | 1.0 |
| 4A | tap water | - | - | 89.0 |
| | unrefined cane sugar | finely ground Kokuto MP-1 | Ueno Sugar Co., Ltd. | 10.0 |
| | cysteine | Cysteine hydrochloride | Japan Protein Co., Ltd. | 1.0 |
| 5A | tap water | - | - | 89.0 |
| | unrefined cane sugar with processing | Okinawa specialty product processed Kokuto Miyarabi | Hokubu Seito Co., Ltd. | 10.0 |
| | cysteine | Cysteine hydrochloride | Japan Protein Co., Ltd. | 1.0 |

### 3. Sensory evaluation

(1) In the same manner as in Example 1, 1.0 wt% of each evaluation sample in Table 4 was dissolved in hot water at 65°C.
(2) A sensory evaluation was performed by a panel of five experts according to the criteria similar to those in Example 1. The average ratings by the five expert panel are shown in Table 5 below.

**[Table 5]**

| test section No. | test section | heating raw material | | sensory evaluation results | | |
|---|---|---|---|---|---|---|
| | | carbohydrates | amino acids | meat taste/ texture | meaty aroma | total livestock meat flavor |
| Posi. Cont. | boiled chicken extract | - | - | | | |
| Comparative Example 1A | unrefined cane sugar alone | Muscovado Sugar | - | - | - | - |
| Comparative Example 2A | cysteine alone | - | cysteine | - | - | - |
| Comparative Example 3A | xylose×Cys | xylose | cysteine | - | + | - |
| 1A | various kinds of unrefined cane sugar×Cys | Muscovado Sugar | cysteine | ++ | ++ | ++ |
| 2A | | Okinawa powdery Kokuto | cysteine | + | ++ | ++ |
| 3A | | Muscovado Sugar powder | cysteine | + | + | + |
| 4A | | finely ground Kokuto MP-1 | cysteine | + | + | + |
| 5A | | processed Kokuto Miyarabi | cysteine | + | + | + |

It was confirmed that both unrefined cane sugar and unrefined cane sugar with processing have the effect of imparting a feeling of livestock meat, although the strength of the effect varies.

### [Example 3]

### 1. Preparation of livestock meat extract (boiled chicken extract))

Boiled chicken extracts were prepared in the same manner as in Example 1.

### 2. Preparation of each evaluation test section

(1) Each raw material was weighed in a beaker at the mixing ratio shown in Table 6 (unrefined cane sugar used was "Muscovado Sugar" manufactured by Mitsui DM Sugar Co., Ltd., and cysteine (Cys hydrochloride) used was "cysteine hydrochloride" manufactured by Nippon Protein Co., Ltd.).
(2) The mixture was stirred, mixed and dissolved using a stirrer and stirrer bar.
(3) The pH was adjusted as described in Table 6 with hydrochloric acid and sodium hydroxide of food additive standards.
(4) The mixture was transferred to a heat-resistant vial, sealed, and heated at temperature and time described in Table 6 using an oil bath.
(5) After cooling with flowing water, a sample for each evaluation test section was prepared.

**[Table 6]**

| test section No. | raw material ratio [wt%] | | | pH | temperature | time |
|---|---|---|---|---|---|---|
| | unrefined cane sugar | cysteine | tap water | - | [°C] | [min.] |
| 1B | 10 | 0.001 | 89.999 | 5 | 95 | 120 |
| 2B | 10 | 0.01 | 89.99 | 5 | 80 | 30 |
| 3B | | | | 5 | 80 | 180 |
| 4B | | | | 5 | 95 | 120 |
| 5B | | | | 5 | 150 | 30 |
| 6B | | | | 5 | 150 | 180 |
| 7B | 10 | 0.1 | 89.9 | 5 | 95 | 120 |
| 8B | 10 | 1 | 89 | 5 | 50 | 10 |
| 9B | | | | 5 | 50 | 240 |
| 10B | 10 | 1 | 89 | 5 | 80 | 30 |
| 11B | | | | 5 | 80 | 180 |
| 12B | | | | 3 | 95 | 120 |
| 13B | | | | 4 | 95 | 120 |
| 14B | | | | 5 | 95 | 120 |
| 15B | | | | 7 | 95 | 120 |
| 16B | | | | 8 | 95 | 120 |
| 17B | | | | 5 | 150 | 30 |
| 18B | | | | 5 | 150 | 180 |
| 19B | 10 | 1 | 89 | 5 | 180 | 10 |
| 20B | | | | 5 | 180 | 240 |
| 21B | 10 | 10 | 80 | 5 | 95 | 120 |
| 22B | 1 | 10 | 89 | 5 | 80 | 30 |
| 23B | | | | 5 | 80 | 180 |
| 24B | | | | 5 | 95 | 120 |
| 25B | | | | 5 | 150 | 30 |
| 26B | | | | 5 | 150 | 180 |
| 27B | 0.1 | 10 | 89.9 | 5 | 95 | 120 |

### 3. Sensory evaluation

(1) In the same manner as in Example 1, 1.0 wt% of each evaluation sample in Table 6 was dissolved in hot water at 65°C.
(2) A sensory evaluation was performed by a panel of five experts according to the criteria similar to those in Example 1. The results of overall livestock meat flavor (state in which both meat taste and/or mouthfeel and the meat aroma are imparted)) are shown in the following Tables. The average ratings by the five expert panel are shown in Tables 7 to 13 below.

**[Table 7]**

| (1) unrefined cane sugar:Cys hydrochloride=1:0.0001(1B) temperature [°C] | | | | | | | |
|---|---|---|---|---|---|---|---|
| | | 50 | 80 | 95 | 130 | 150 | 180 |
| time [min.] | 10 | | | | | | |
| | 30 | | | | | | |
| | 60 | | | | | | |
| | 120 | | | - | | | |
| | 180 | | | | | | |
| | 240 | | | | | | |

**[Table 8]**

| (2) unrefined cane sugar:Cys hydrochloride=1:0.001(2B-6B) temperature [°C] | | | | | | | |
|---|---|---|---|---|---|---|---|
| | | 50 | 80 | 95 | 130 | 150 | 180 |
| time [min.] | 10 | | | | | | |
| | 30 | | + | | | + | |
| | 60 | | | | | | |
| | 120 | | | + | | | |
| | 180 | | + | | | + | |
| | 240 | | | | | | |

**[Table 9]**

| (3) unrefined cane sugar:Cys hydrochloride=1:0.01(7B) temperature [°C] | | | | | | | |
|---|---|---|---|---|---|---|---|
| | | 50 | 80 | 95 | 130 | 150 | 180 |
| time [min.] | 10 | | | | | | |
| | 30 | | | | | | |
| | 60 | | | | | | |
| | 120 | | | + | | | |
| | 180 | | | | | | |
| | 240 | | | | | | |

**[Table 10]**

| (4) unrefined cane sugar:Cys hydrochloride=1:0.1(8B-20B) temperature [°C] | | | | | | | |
|---|---|---|---|---|---|---|---|
| | | 50 | 80 | 95 | 130 | 150 | 180 |
| time [min.] | 10 | - | | | | | - |
| | 30 | | + | | | ++ | |
| | 60 | | | | | | |
| | 120 | | | ++ | | | |
| | 180 | | + | | | + | |
| | 240 | - | | | | | - |

**[Table 11]**

| (5) unrefined cane sugar:Cys hydrochloride=1:1(21B) temperature [°C] | | | | | | | |
|---|---|---|---|---|---|---|---|
| | | 50 | 80 | 95 | 130 | 150 | 180 |
| time [min.] | 10 | | | | | | |
| | 30 | | | | | | |
| | 60 | | | | | | |
| | 120 | | | ++ | | | |
| | 180 | | | | | | |
| | 240 | | | | | | |

**[Table 12]**

| (6) unrefined cane sugar:Cys hydrochloride=1:10(22B-26B) temperature [°C] | | | | | | | |
|---|---|---|---|---|---|---|---|
| | | 50 | 80 | 95 | 130 | 150 | 180 |
| time [min.] | 10 | | | | | | |
| | 30 | | + | | | ++ | |
| | 60 | | | | | | |
| | 120 | | | + | | | |
| | 180 | | + | | | + | |
| | 240 | | | | | | |

**[Table 13]**

| (7) unrefined cane sugar:Cys hydrochloride=1:100(27B) temperature [°C] | | | | | | | |
|---|---|---|---|---|---|---|---|
| | | 50 | 80 | 95 | 130 | 150 | 180 |
| time [min.] | 10 | | | | | | |
| | 30 | | | | | | |
| | 60 | | | | | | |
| | 120 | | | - | | | |
| | 180 | | | | | | |
| | 240 | | | | | | |

### [Industrial Applicability]

According to the present invention, a composition capable of effectively and conveniently imparting livestock meat flavors to food products without using a livestock meat material is provided.

This application is based on a patent application No. 2021-051775 filed in Japan, the contents of which are encompassed in full herein.

## Claims

1. A method for producing a livestock meat flavor-imparting agent, comprising heating a crude sugar, and a cysteine or a salt thereof.

2. The method according to claim 1, wherein the crude sugar is unrefined cane sugar.

3. The method according to claim 1 or 2, wherein the cysteine is derived from a cysteine-containing raw material.

4. The method according to claim 3, wherein the cysteine-containing raw material is selected from the group consisting of glutathione, a glutathione-containing yeast extract, a cysteine-containing yeast extract, cystine, and a food product with a high cysteine content.

5. The method according to claim 4, wherein the glutathione is treated with an enzyme.

6. The method according to any one of claims 1 to 5, wherein 0.0005 to 50 parts by weight of cysteine or a salt thereof is heated with respect to 1 part by weight of the crude sugar.

7. The method according to any one of claims 1 to 6, wherein a heating temperature is 60 to 170°C.

8. The method according to any one of claims 1 to 7, wherein a heating time is 15 to 200 min.

9. The method according to any one of claims 1 to 8, wherein the livestock meat flavor-imparting agent is for animal-free food products.

10. A livestock meat flavor-imparting agent comprising a heated product of a crude sugar, and cysteine or a salt thereof as an active ingredient.

11. The agent according to claim 10, wherein the crude sugar is unrefined cane sugar.

12. The agent according to claim 10 or 11, wherein the cysteine is a cysteine derived from a cysteine-containing raw material.

13. The agent according to claim 12, wherein the cysteine-containing raw material is selected from the group consisting of glutathione, a glutathione-containing yeast extract, a cysteine-containing yeast extract, cystine, and a food product with a high cysteine content.

14. The agent according to claim 13, wherein the glutathione is treated with an enzyme.

15. The agent according to any one of claims 10 to 14,
wherein a weight ratio of the crude sugar and the cysteine or a salt thereof is 1:0.0005 - 50 before heating.

16. The agent according to any one of claims 10 to 15,
wherein a concentration of the imparting agent at the time of eating is 1 to 100,000 ppm with respect to the food product.

17. The agent according to any one of claims 10 to 16, for animal-free food products.

18. A method for imparting a livestock meat flavor, comprising adding a heated product of a crude sugar, and cysteine or a salt thereof to a food product.

19. The method according to claim 18, wherein the crude sugar is unrefined cane sugar.

20. The method according to claim 18 or 19, wherein the cysteine is a cysteine derived from a cysteine-containing raw material.

21. The method according to claim 20, wherein the cysteine-containing raw material is selected from the group consisting of glutathione, a glutathione-containing yeast extract, a cysteine-containing yeast extract, cystine, and a food product with a high cysteine content.

22. The method according to claim 21, wherein the glutathione is treated with an enzyme.

23. The method according to any one of claims 18 to 22,
wherein a weight ratio of the crude sugar and the cysteine or a salt thereof is 1:0.0005 - 50 before heating.

24. The method according to any one of claims 18 to 23,
wherein the heated product is added at a concentration of 1 to 100,000 ppm with respect to the food product.

25. The method according to any one of claims 18 to 24, wherein the food product is an animal-free food product.

26. A method for producing a food product, comprising adding a heated product of a crude sugar, and cysteine or a salt thereof.

27. A food product comprising a heated product of a crude sugar, and cysteine or a salt thereof.

28. A method for imparting a livestock meat flavor, comprising adding a crude sugar, and cysteine or a salt thereof to a food product, and heating the added food product.

29. A method for producing a food product, comprising adding a crude sugar, and cysteine or a salt thereof to a food product, and heating the added food product.
